# EUROPEAN PATENT APPLICATION

(11) **EP 4 297 125 A1**
(43) Date of publication of application: **27.12.2023**
(21) Application number: 21926802.6
(22) Date of filing: 21.12.2021
(51) Int. Cl.: H01M 4/139, H01M 4/13, H01M 4/62

(54) **NEGATIVE ELECTRODE SLURRY FOR LITHIUM ION SECONDARY BATTERY, METHOD FOR MANUFACTURING NEGATIVE ELECTRODE FOR LITHIUM ION SECONDARY BATTERY, METHOD FOR MANUFACTURING LITHIUM ION SECONDARY BATTERY, NEGATIVE ELECTRODE FOR LITHIUM ION SECONDARY BATTERY, AND LITHIUM ION SECONDARY BATTERY**

(30) Priority: 18.02.2021 JP 2021024407
(71) Applicant: Panasonic Intellectual Property Management Co., Ltd., Osaka-shi, Osaka 540-6207 (JP)
(72) Inventor: KOMI, Satoshi, Kadoma-shi, Osaka 571-0057 (JP); OKUNO, Yukiho, Kadoma-shi, Osaka 571-0057 (JP); IWAI, Mitsuru, Kadoma-shi, Osaka 571-0057 (JP); TSUTSUMI, Shuji, Kadoma-shi, Osaka 571-0057 (JP)
(74) Representative: Novagraaf International SA
(86) International application number: PCT/JP2021/047348
(87) International publication number: WO 2022/176379

(57) **Abstract**

A negative electrode slurry for a lithium ion secondary battery, according to an aspect of the present disclosure, comprises a negative electrode active material, a thickener, a preservative component, and a solvent, the thickener comprising carboxymethyl - cellulose or a salt thereof, the solvent comprising water, and the preservative component comprising a cyclic hydroxamic acid ethanolamine salt.

## Description

### TECHNICAL FIELD

The present disclosure relates to a negative electrode slurry for a lithium ion secondary battery, a method for manufacturing a negative electrode for a lithium ion secondary battery, a method for manufacturing a lithium ion secondary battery, a negative electrode for a lithium ion secondary battery, and a lithium ion secondary battery.

### BACKGROUND

As a solvent used in a negative electrode slurry for a lithium ion secondary battery, water is desirably used from the viewpoint of ease of solvent recovery after application to a negative electrode current collector and drying and the viewpoint of environment. It is conventionally known that a thickener containing a carboxymethyl cellulose salt is added to a negative electrode slurry for a lithium ion secondary battery in order to stabilize dispersion and prevent precipitation of a negative electrode active material in a solvent (see, for example, Patent Literature 1).

### CITATION LIST

### PATENT LITERATURE

Patent Literature 1: JP H05-074461 A

### SUMMARY

### TECHNICAL PROBLEM

In a case where water is used as the solvent and carboxymethyl cellulose or its salt is used as the thickener, microorganisms contained in the water decompose the carboxymethyl cellulose or its salt to reduce the viscosity of the negative electrode slurry for a lithium ion secondary battery, and thus the negative electrode active material dispersed in the slurry is easily precipitated.

Therefore, in the case of using a negative electrode slurry, for a lithium ion secondary battery, containing water and carboxymethyl cellulose or its salt, the negative electrode active material is precipitated in a storage process of the slurry or a manufacturing process of a negative electrode, and thus, for example, when the slurry is applied onto a negative electrode current collector, unevenness in the application may occur, and the battery performance may deteriorate.

Therefore, an object of the present disclosure is to provide a negative electrode slurry, for a lithium ion secondary battery, in which a decrease with time in viscosity is suppressed. Another object of the present disclosure is to provide a method for manufacturing a negative electrode for a lithium ion secondary battery and a method for manufacturing a lithium ion secondary battery using the negative electrode slurry for a lithium ion secondary battery.

### SOLUTION TO PROBLEM

A negative electrode slurry for a lithium ion secondary battery, according to an aspect of the present disclosure, contains a negative electrode active material, a thickener, a preservative, and a solvent, and the thickener contains carboxymethyl cellulose or a carboxymethyl cellulose salt, the solvent contains water, and the preservative contains a cyclic hydroxamic acid ethanolamine salt having the following Chemical Formula (1).

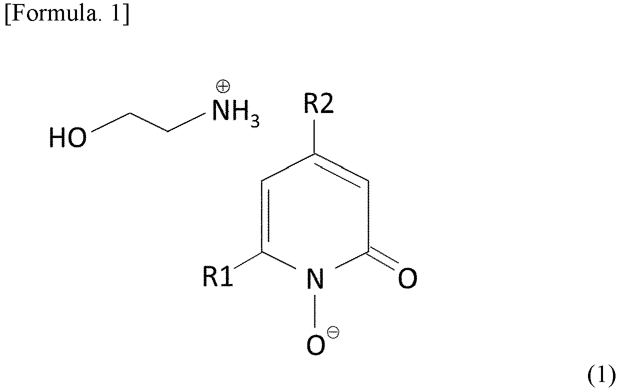

In Chemical Formula (1), R1 and R2 each independently represent a hydrogen atom or a hydrocarbon group optionally having a substituent.

A method for manufacturing a negative electrode for a lithium ion secondary battery, according to an aspect of the present disclosure, includes a step of applying the negative electrode slurry for a lithium ion secondary battery onto a negative electrode current collector.

A method for manufacturing a lithium ion secondary battery, according to an aspect of the present disclosure, includes using a negative electrode for a lithium ion secondary battery obtained by the method for manufacturing a negative electrode for a lithium ion secondary battery.

A negative electrode for a lithium ion secondary battery, according to an aspect of the present disclosure, includes a negative electrode mixture layer containing a negative electrode active material, a thickener, and a preservative, and the thickener contains carboxymethyl cellulose or a carboxymethyl cellulose salt, and the preservative contains a cyclic hydroxamic acid ethanolamine salt having the following Chemical Formula (1).

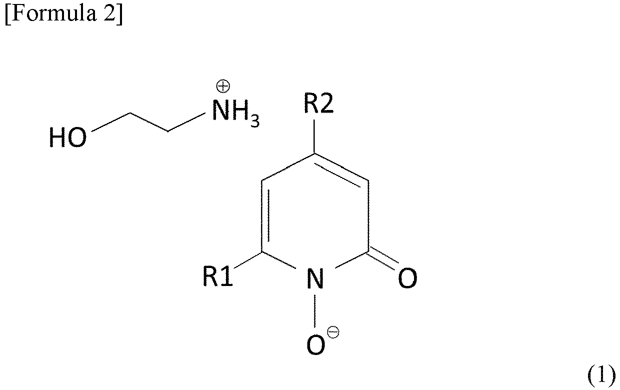

In Chemical Formula (1), R1 and R2 each independently represent a hydrogen atom or a hydrocarbon group optionally having a substituent.

A lithium ion secondary battery according to an aspect of the present disclosure includes the negative electrode for a non-aqueous electrolyte secondary battery.

### ADVANTAGEOUS EFFECTS OF INVENTION

In the negative electrode slurry for a lithium ion secondary battery according to an aspect of the present disclosure, a decrease with time in viscosity can be suppressed.

### BRIEF DESCRIPTION OF DRAWINGS

FIG. 1 is a sectional view of a lithium ion secondary battery of an example of an embodiment.
FIG. 2 is a graph showing a change with time in viscosity of negative electrode slurries of Examples 1 to 4 and Comparative Example.
FIG. 3 is a graph showing a change with time in the viscosity retention rate of the negative electrode slurries of Examples 1 to 4 and Comparative Example.

### DESCRIPTION OF EMBODIMENTS

### (Negative Electrode Slurry for Lithium Ion Secondary Battery)

The negative electrode slurry for a lithium ion secondary battery according to the present embodiment (hereinafter, sometimes referred to as negative electrode slurry) contains a negative electrode active material, a thickener, a preservative, and a solvent.

The negative electrode active material is not particularly limited as long as it is a material that can be used as a negative electrode active material of a conventional lithium ion secondary battery, and examples of the material include carbon materials such as artificial graphite, natural graphite, hard carbon, soft carbon, carbon nanotubes, and activated carbon, metals such as Li, Si, and Sn, alloys of such metals, and metal compounds of such metals, such as metal oxides, metal sulfides, and metal nitrides. Examples of the alloys include Li-containing alloys such as a lithium-aluminum alloy, a lithium-tin alloy, a lithium-lead alloy, and a lithium-silicon alloy. Examples of the metal oxides include lithium titanates (Li₄Ti₅O₁₂ and the like), cobalt oxides, and iron oxides. Examples of the metal nitrides include lithium-containing nitrides such as lithium-cobalt nitrides, lithium-iron nitrides, and lithium-manganese nitrides. Sulfur-based compounds may also be exemplified.

The thickener is used to adjust the viscosity of the negative electrode slurry to an appropriate range, and contains carboxymethyl cellulose or its salt (hereinafter, sometimes referred to as CMC or CMC salt). The thickener is to contain CMC or a CMC salt, and may contain both of CMC and a CMC salt. Examples of the CMC salt include an ammonium salt, a sodium salt, a potassium salt, and a lithium salt. The negative electrode slurry of the present embodiment may contain a conventionally known thickener such as polyethylene glycol or polyethylene oxide in addition to the CMC or the CMC salt.

The content of the CMC or the CMC salt is to be, for example, in a range of 0.5 mass% to 3 mass% with respect to the total amount of the negative electrode slurry.

The solvent contains water. The solvent is desirably composed of only water from the viewpoints of, for example, ease of recovery during drying and environmental compatibility, but may contain, for example, a water-soluble organic solvent such as an alcohol. Examples of the water include, and are not particularly limited to, ultrapure water, pure water, and industrial water, but in the case of selecting a grade of water without limitation due to the treatment cost and the amount of water to be used, water belonging to the class A1 specified in Japanese Industrial Standards is generally used.

The preservative contains a cyclic hydroxamic acid ethanolamine salt having the following Chemical Formula (1).

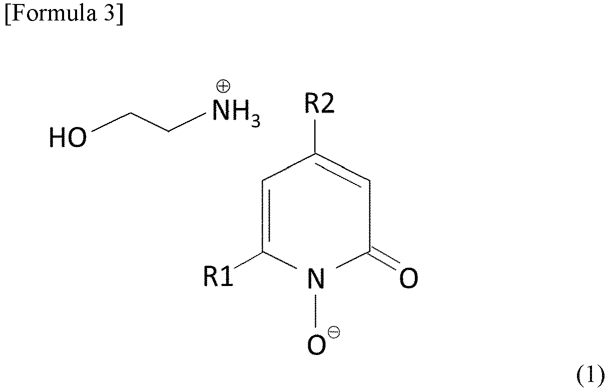

In Chemical Formula (1), R1 and R2 each independently represent a hydrogen atom or a hydrocarbon group optionally having a substituent.

Examples of R1 representing a hydrocarbon group optionally having a substituent in Chemical Formula (1) include a linear or branched alkyl or alkenyl group, a linear or optionally branched cycloalkyl or aryl group, and an alkylalkylene oxide group (in which the alkyl and the alkylene moieties may be linear or branched). The number of carbon atoms of R1 representing a hydrocarbon group optionally having a substituent may be, for example, greater than or equal to 1, greater than or equal to 3, or greater than or equal to 6, and less than or equal to 30, less than or equal to 20, or less than or equal to 8.

Examples of R2 representing a hydrocarbon group optionally having a substituent in Chemical Formula (1) include a linear or branched alkyl or alkenyl group, a linear or optionally branched cycloalkyl group, a phenyl group, and a benzyl group. The number of carbon atoms of R2 representing a hydrocarbon group optionally having a substituent may be, for example, greater than or equal to 1, and less than or equal to 6, or less than or equal to 4. A specific example of R2 may be a methyl group.

Specific examples of the cyclic hydroxamic acid ethanolamine salt include piroctone olamine having the following Chemical Formula (1A) (1-hydroxy-4-methyl-6-(2,4,4-trimethylpentyl)-2(1H)-pyridone ethanolamine salt) and ciclopirox olamine having the following Chemical Formula (1B) (6-cyclohexyl-1-hydroxy-4-methyl-2(1H)-pyridone ethanolamine salt). These may be used singly or in combination of two kinds thereof.

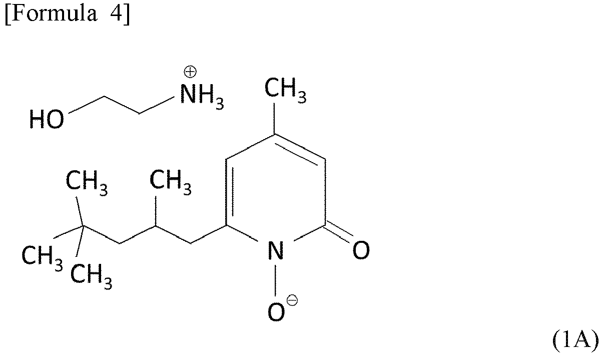

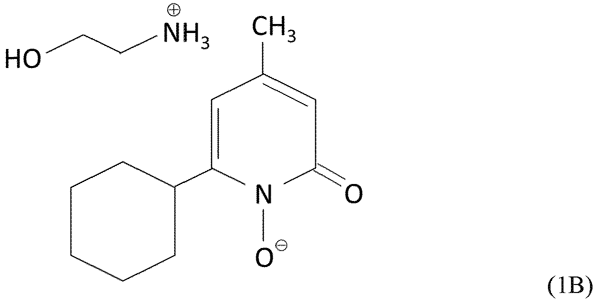

A negative electrode slurry containing CMC or a CMC salt and water conventionally has a problem that the viscosity of the negative electrode slurry decreases with time and thus the negative electrode active material in the negative electrode slurry is precipitated because microorganisms such as bacteria in the water secrete a cellulolytic enzyme or the like to decompose the CMC or the CMC salt. However, the negative electrode slurry of the present embodiment can suppress propagation of microorganisms such as bacteria or kill microorganisms with the cyclic hydroxamic acid ethanolamine salt having Chemical Formula (1), and therefore in the negative electrode slurry, a decrease with time in viscosity is suppressed. As a result, precipitation of the negative electrode active material in the negative electrode slurry is suppressed, and for example, when the slurry is applied onto a negative electrode current collector, unevenness in the application can be suppressed, and thus deterioration of battery performance can be suppressed.

The content of the cyclic hydroxamic acid ethanolamine is preferably greater than or equal to 0.025 mass% with respect to the total amount of the negative electrode slurry from the viewpoint of effectively suppressing a decrease with time in the viscosity of the negative electrode slurry. The upper limit is not particularly limited, and for example, the content of the cyclic hydroxamic acid ethanolamine may be less than or equal to 1 mass% with respect to the total amount of the negative electrode slurry.

The negative electrode slurry of the present embodiment may contain an additive such as a binder in addition to the negative electrode active material, the thickener, the preservative, and the solvent. As the binder, for example, polyethylene, polypropylene, a fluorine-based binder, rubber particles, an acryl-based polymer, a vinyl-based polymer, or the like can be used. Examples of the fluorine-based binder include polytetrafluoroethylene (PTFE), polyvinylidene fluoride (PVDF), a tetrafluoroethylene-hexafluoropropylene copolymer (FEP), and a vinylidene fluoride-hexafluoropropylene copolymer. Examples of the rubber particles include acrylic rubber particles, styrenebutadiene rubber (SBR) particles, and acrylonitrile rubber particles.

The viscosity of the negative electrode slurry may be greater than or equal to 2000 mPa s, or greater than or equal to 5000 mPa·s from the viewpoint of, for example, suppressing precipitation of the negative electrode active material. If the negative electrode slurry has too high a viscosity, it is difficult to apply the negative electrode slurry uniformly into a required thickness, and therefore the viscosity is to be less than or equal to 20000 mPa s, or less than or equal to 15000 mPa s. The viscosity of the negative electrode slurry is a value measured using a BM rotational viscometer in an environment of 25°C after 1 minute of rotor rotation at a rotation number of 20 rpm.

For preparation of the negative electrode slurry, various conventionally known methods can be used, and for example, various commercially available dispersers can be used for dispersing various materials such as a negative electrode active material, a thickener, and a preservative in a solvent to prepare a negative electrode slurry. Specific examples of the disperser include media-type dispersers such as bead mills, ball mills, planetary ball mills, kneaders, planetary mixers, and disperser-mixers and media-less dispersers such as homogenizers.

### (Negative Electrode for Lithium Ion Secondary Battery)

For producing a negative electrode using the negative electrode slurry of the present embodiment, a method similar to conventional methods can be adopted. For example, the negative electrode slurry of the present embodiment is applied to a negative electrode current collector, dried to form a negative electrode mixture layer, and rolled as necessary to obtain a negative electrode. The negative electrode mixture layer may be formed on both surfaces of the negative electrode current collector in the thickness direction. In the case of forming the negative electrode mixture layer on one surface of the negative electrode current collector, the thickness of the negative electrode mixture layer is, for example, greater than or equal to 20 and less than or equal to 150 µm, and in the case of forming the negative electrode mixture layer on both surfaces of the negative electrode current collector, the thickness is, for example, greater than or equal to 50 and less than or equal to 250 µm in total.

As the negative electrode current collector, negative electrode current collectors commonly used in the field of lithium ion secondary batteries can be used, and examples of the negative electrode current collector include sheets and foils containing copper, nickel, or a noble metal. The sheets may be a porous body. Examples of the porous body include foam bodies, woven fabrics, and nonwoven fabrics. The thickness of the sheets and the foils is not particularly limited, and is, for example, greater than or equal to 1 and less than or equal to 100 µm.

The negative electrode slurry can be applied to the surface of the negative electrode current collector using, for example, a slit die coater, a reverse roll coater, a lip coater, a blade coater, a knife coater, a gravure coater, a dip coater, or the like. The negative electrode slurry applied to the negative electrode current collector may be dried in a manner similar to that in natural drying, but is desirably dried at a temperature higher than or equal to 100°C and lower than or equal to 200°C for 10 minutes to 1 hour in consideration of productivity.

In a case where the negative electrode slurry is heated and dried to form a negative electrode mixture layer, the cyclic hydroxamic acid ethanolamine salt in the negative electrode slurry may be thermally modified to generate a thermally modified product and the thermally modified product may be detected in the negative electrode mixture layer. For example, in the case of using piroctone olamine as the cyclic hydroxamic acid ethanolamine, thermally modified products having the following Formulae (2) to (4) and the like may be detected in addition to piroctone olamine in the negative electrode mixture layer.

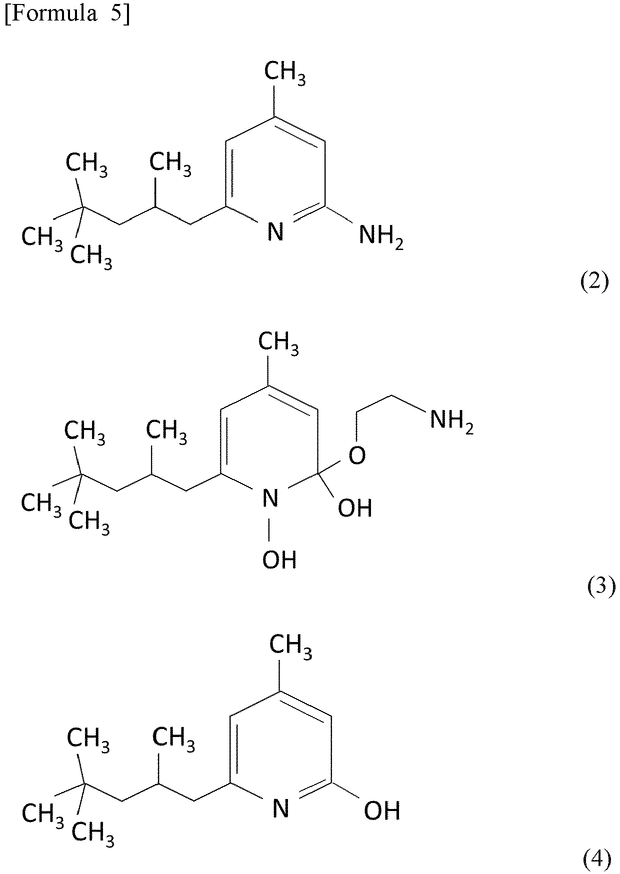

The rolling is performed several times at a predetermined linear pressure, for example, with a roll press machine until the negative electrode has a predetermined thickness.

After performing such a series of steps, the resulting product is cut and processed to obtain a negative electrode for a lithium ion secondary battery. In the negative electrode for a lithium ion secondary battery of the present embodiment, the content of the cyclic hydroxamic acid ethanolamine is preferably greater than or equal to 0.05 mass% with respect to the total amount of the negative electrode mixture layer.

### (Lithium Ion Secondary Battery)

The lithium ion secondary battery of the present embodiment can adopt a configuration similar to that of a conventional lithium ion secondary battery except for using the negative electrode produced using the negative electrode slurry of the present embodiment.

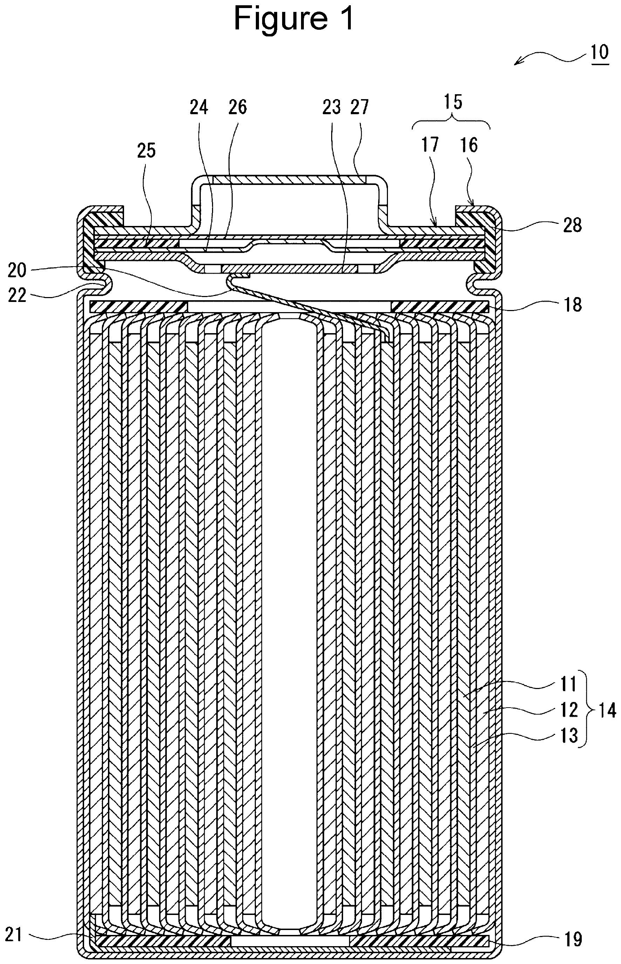

FIG. 1 is a sectional view of a lithium ion secondary battery of an example of an embodiment. A lithium ion secondary battery 10 shown in FIG. 1 includes a wound electrode assembly 14 in which a positive electrode 11 and a negative electrode 12 are wound with a separator 13 interposed therebetween, an electrolyte, insulating plates 18 and 19 disposed on the upper and lower sides of the electrode assembly 14 respectively, and a battery case 15 housing the above-described members. The battery case 15 includes a bottomed cylindrical case body 16 and a sealing assembly 17 that seals an opening of the case body 16. Instead of the wound electrode assembly 14, an electrode assembly having another form, such as a stacked electrode assembly in which positive electrodes and negative electrodes are alternately stacked with separators interposed therebetween, may be applied. Examples of the battery case 15 include metal cases having a cylindrical shape, a square shape, a coin shape, a button shape, or the like, and resin cases (laminated batteries) formed by lamination with a resin sheet.

The case body 16 is, for example, a bottomed cylindrical metal container. A gasket 28 is provided between the case body 16 and the sealing assembly 17 to ensure the sealability inside the battery. The case body 16 has a projecting portion 22 in which, for example, a part of the side part of the case body 16 protrudes inward to support the sealing assembly 17. The projecting portion 22 is preferably formed in an annular shape along the circumferential direction of the case body 16, and supports the sealing assembly 17 on its upper surface.

The sealing assembly 17 has a structure in which a filter 23, a lower vent member 24, an insulating member 25, an upper vent member 26, and a cap 27 are sequentially stacked from the electrode assembly 14 side. Each member included in the sealing assembly 17 has, for example, a disk shape or a ring shape, and the members excluding the insulating member 25 are electrically connected to each other. The lower vent member 24 and the upper vent member 26 are connected to each other at their central parts, and the insulating member 25 is interposed between the circumferential parts of the lower vent member 24 and the upper vent member 26. When the internal pressure of the secondary battery 10 increases due to heat generated by an internal short circuit or the like, for example, the lower vent member 24 deforms so as to push the upper vent member 26 up toward the cap 27 side and breaks, and thus the current pathway between the lower vent member 24 and the upper vent member 26 is cut off. When the internal pressure further increases, the upper vent member 26 breaks, and gas is discharged from an opening of the cap 27.

In the lithium ion secondary battery 10 shown in FIG. 1, a positive electrode lead 20 attached to the positive electrode 11 extends to the sealing assembly 17 side through a through hole of the insulating plate 18, and a negative electrode lead 21 attached to the negative electrode 12 extends to the bottom side of the case body 16 through the outside of the insulating plate 19. The positive electrode lead 20 is connected to the lower surface of the filter 23, which is the bottom plate of the sealing assembly 17, by welding or the like, and the cap 27, which is electrically connected to the filter 23 and is the top plate of the sealing assembly 17, serves as a positive electrode terminal. The negative electrode lead 21 is connected to the bottom inner surface of the case body 16 by welding or the like, and the case body 16 serves as a negative electrode terminal.

Hereinafter, the positive electrode 11, the negative electrode 12, the separator 13, and the electrolyte will be described in detail.

The negative electrode 12 is a negative electrode obtained by the method for manufacturing a negative electrode slurry of the present embodiment. The configuration of the negative electrode 12 is as described above, and description of the configuration is omitted here.

The positive electrode 11 is produced, for example, by applying a positive electrode slurry to one surface or both surfaces of a positive electrode current collector, and drying and rolling the positive electrode slurry to form a positive electrode mixture layer. As the positive electrode current collector, positive electrode current collectors commonly used in the field of lithium ion secondary batteries can be used, and examples of the positive electrode current collector include sheets and foils containing stainless steel, aluminum, an aluminum alloy, titanium, or the like. The sheets may be a porous body. Examples of the porous body include foam bodies, woven fabrics, and nonwoven fabrics. The thickness of the sheets and the foils is not particularly limited, and is, for example, greater than or equal to 1 and less than or equal to 500 µm.

The positive electrode slurry can contain a conventionally known positive electrode active material, a conductive agent, a binder, a thickener, a dispersion medium, and the like.

Examples of the positive electrode active material include olivine-type lithium salts such as LiFePO₄, chalcogen compounds such as titanium disulfide and molybdenum disulfide, manganese dioxide, and conventional lithium-containing composite metal oxides. Examples of the conventional lithium-containing composite metal oxides include metal oxides containing lithium and a transition metal and metal oxides containing lithium and a transition metal that is partially substituted with a different element. Here, examples of the different element include Na, Mg, Sc, Y, Mn, Fe, Co, Ni, Cu, Zn, Al, Cr, Pb, Sb, and B, and Mn, Al, Co, Ni, Mg, and the like are preferable. One kind of the different element may be used, or greater than or equal to two kinds of the different elements may be used.

Specific examples of the lithium-containing composite metal oxides include LiₓCoO₂, LiₓNiO₂, LiₓMnO₂, LiₓCo_{y}Ni_{1-y}O₂, LiₓCo_{y}M_{1-y}O_{z}, LiₓNi_{1-y}M_{y}O_{z}, LiₓMn₂O₄, LiₓMn_{2-y}M_{y}O₄, LiMPO₄, and Li₂MPO₄F (in each chemical formula, M represents, for example, at least one element selected from the group consisting of Na, Mg, Sc, Y, Mn, Fe, Co, Ni, Cu, Zn, Al, Cr, Pb, Sb, V, and B, and x = 0 to 1.2, y = 0 to 0.9, z = 2.0 to 2.3).

Examples of the conductive agent include carbon black, graphite, carbon fibers, and metal fibers. Examples of the carbon black include acetylene black, Ketjenblack, channel black, furnace black, lamp black, and thermal black. The conductive agents can be used singly or in combination of greater than or equal to two kinds thereof.

The binder can be used without particular limitation as long as it can be dissolved or dispersed in the dispersion medium. For example, polyethylene, polypropylene, a fluorine-based binder, rubber particles, an acryl-based polymer, a vinyl-based polymer, or the like can be used. Examples of the fluorine-based binder include polytetrafluoroethylene (PTFE), polyvinylidene fluoride (PVDF), a tetrafluoroethylene
- hexafluoropropylene copolymer (FEP), and a vinylidene fluoride-hexafluoropropylene copolymer. The binders can be used singly or in combination of greater than or equal to two kinds thereof.

As the thickener, thickeners commonly used in this field can be used, and examples of the thickener include carboxymethyl cellulose and its salts.

The dispersion medium is preferably, for example, an amide such as N,N-dimethylformamide, dimethylacetamide, methylformamide, hexamethylsulforamide, or tetramethylurea, an amine such as N-methyl-2-pyrrolidone (NMP) or dimethylamine, a ketone such as methyl ethyl ketone, acetone, or cyclohexanone, an ether such as tetrahydrofuran, or a sulfoxide such as dimethyl sulfoxide.

For preparing the positive electrode slurry, a method commonly used in this field can be adopted. Examples of the method include a method in which the above-described components are mixed using a mixer such as a planetary mixer, a disperser-mixer, a pin mixer, a kneader, or a homogenizer. The mixers are used singly or in combination of greater than or equal to two kinds thereof.

The positive electrode slurry can be applied to the surface of the positive electrode current collector using, for example, a slit die coater, a reverse roll coater, a lip coater, a blade coater, a knife coater, a gravure coater, a dip coater, or the like. The positive electrode mixture paste applied to the positive electrode current collector is preferably dried in a manner similar to that in natural drying, but is preferably dried at a temperature higher than or equal to 70°C and less than or equal to 200°C for 10 minutes to 5 hours in consideration of productivity.

The rolling is performed several times at a predetermined linear pressure with a roll press machine until the positive electrode 11 has a predetermined thickness.

After performing such a series of steps, the resulting product is cut and processed, and thus the positive electrode 11 is obtained.

As the separator 13, for example, a microporous film composed of a polymer material is used. Examples of the polymer material include polyethylene, polypropylene, polyvinylidene fluoride, polyvinylidene chloride, polyacrylonitrile, polyacrylamide, polytetrafluoroethylene, polysulfone, polyethersulfone, polycarbonate, polyamides, polyimides, polyethers (such as polyethylene oxide and polypropylene oxide), celluloses (such as carboxymethyl cellulose and hydroxypropyl cellulose), poly(meth)acrylic acid, and poly(meth)acrylic acid ester. These polymer materials can be used singly or in combination of greater than or equal to two kinds thereof. A multilayer film obtained by superimposing these microporous films can also be used. The microporous film has a thickness, for example, greater than or equal to 15 µm and less than or equal to 30 µm.

The electrolyte contains, for example, a non-aqueous solvent and an electrolyte salt. The electrolyte is not limited to a liquid electrolyte, and may be a solid electrolyte in which a gel polymer or the like is used.

Examples of the non-aqueous solvent include cyclic carbonates and chain carbonates. Examples of the cyclic carbonates include ethylene carbonate, propylene carbonate, and butylene carbonate. Examples of the chain carbonates include dimethyl carbonate, diethyl carbonate, and ethyl methyl carbonate.

Examples of the electrolyte salt include LiPF₆, LiBF₄, LiClO₄, LiAsF₆, LiCF₃SO₃, LiN(SO₂CF₃)₂, LiN(SO₂C₂F₅)₂, and LiC(SO₂CF₃)₃. These electrolyte salts may be used singly or in combination of greater than or equal to two kinds thereof.

### EXAMPLES

Hereinafter, the present disclosure will be further described with reference to Examples. The present disclosure, however, is not limited to these Examples.

### (Example 1)

To 50 mass% of water, 49.575 mass% of graphite powder as a negative electrode active material, 0.4 mass% of sodium carboxymethyl cellulose as a thickener, and 0.025 parts by mass of piroctone olamine were added, and the resulting mixture was stirred with a planetary mixer for 1 hour to obtain a negative electrode slurry. To the negative electrode slurry, 1 mass% of a bacterial solution was added in which bacteria that generate an enzyme capable of decomposing CMC were propagated. Then, the negative electrode slurry after addition of the bacterial solution was put into a container having an inner diameter of 55 mm and a depth of 115 mm, and the change with time in the viscosity of the negative electrode slurry was confirmed using a BM rotational viscometer ["TVB-15M (trade name)" manufactured by Toki Sangyo Co., Ltd] while the temperature was maintained at 25 ± 0.2°C in a constant temperature water bath.

### (Example 2)

A negative electrode slurry was obtained in a manner similar to that in Example 1 except that piroctone olamine was changed to ciclopirox olamine. Then, the change with time in the viscosity of the obtained negative electrode slurry was confirmed in a manner similar to that in Example 1.

### (Example 3)

A negative electrode slurry was obtained in a manner similar to that in Example 1 except that the amount of piroctone olamine added was changed from 0.025 mass% to 0.01 mass% and the amount of graphite powder added was changed from 49.575 mass% to 49.59 mass%. Then, the change with time in the viscosity of the obtained negative electrode slurry was confirmed in a manner similar to that in Example 1.

### (Example 4)

A negative electrode slurry was obtained in a manner similar to that in Example 3 except that piroctone olamine was changed to ciclopirox olamine. Then, the change with time in the viscosity of the obtained negative electrode slurry was confirmed in a manner similar to that in Example 1.

### (Comparative Example)

A negative electrode slurry was obtained in a manner similar to that in Example 1 except that no piroctone olamine was added. Then, the change with time in the viscosity of the obtained negative electrode slurry was confirmed in a manner similar to that in Example 1.

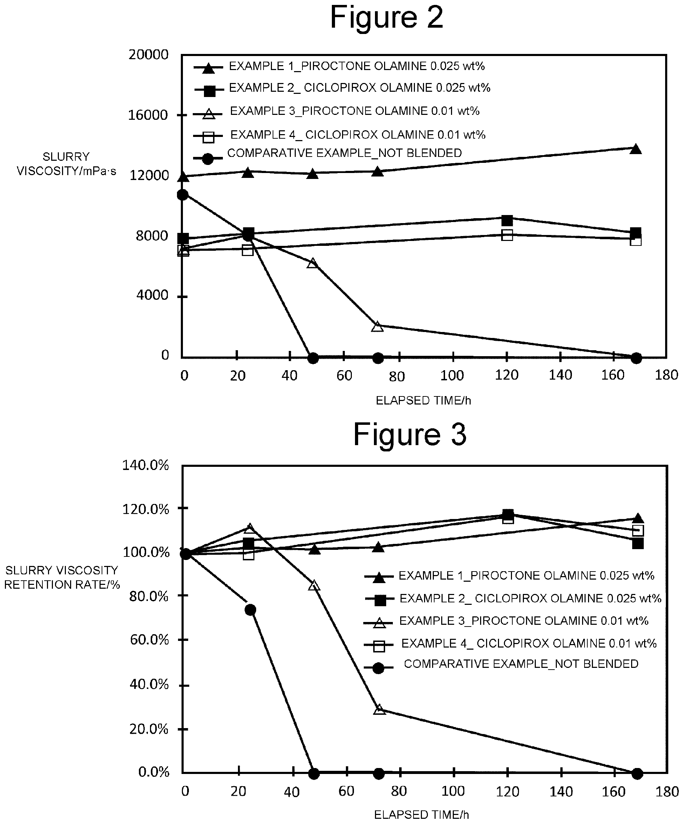

FIG. 2 is a graph showing the change with time in the viscosity of the negative electrode slurries of Examples 1 to 4 and Comparative Example, and FIG. 3 is a graph showing the change with time in the viscosity retention rate of the negative electrode slurries of Examples 1 to 4 and Comparative Example.

As shown in FIGs. 2 and 3, in the negative electrode slurries of Examples 1, 2, and 4, the viscosity changed little after a lapse of 168 hours from the slurry preparation. In the negative electrode slurry of Example 3, the viscosity gradually decreased after a lapse of 30 hours from the slurry preparation, but the decrease with time in the viscosity was suppressed as compared with the negative electrode slurry of Comparative Example in which no piroctone olamine was added.

### REFERENCE SIGNS LIST

- 10: Lithium ion secondary battery
- 11: Positive electrode
- 12: Negative electrode
- 13: Separator
- 14: Electrode assembly
- 15: Battery case
- 16: Case body
- 17: Sealing assembly
- 18, 19: Insulating plate
- 20: Positive electrode lead
- 21: Negative electrode lead
- 22: Projecting portion
- 23: Filter
- 24: Lower vent member
- 25: Insulating member
- 26: Upper vent member
- 27: Cap
- 28: Gasket

## Claims

1. A negative electrode slurry for a lithium ion secondary battery, the negative electrode slurry comprising: a negative electrode active material; a thickener; a preservative; and a solvent,
the thickener containing carboxymethyl cellulose or a carboxymethyl cellulose salt,
the solvent containing water,
the preservative containing a cyclic hydroxamic acid ethanolamine salt having Chemical Formula (1) described below: 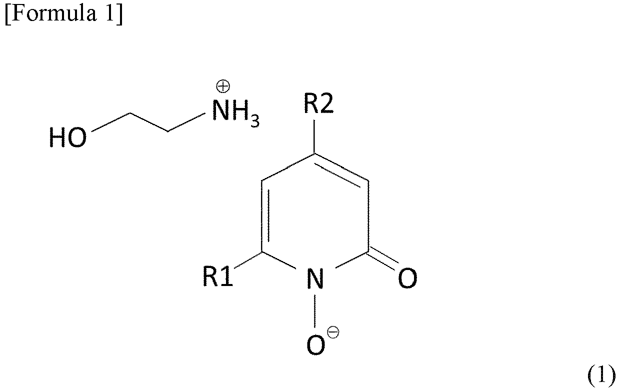
wherein R1 and R2 each independently represent a hydrogen atom or a hydrocarbon group optionally having a substituent.

2. The negative electrode slurry for a lithium ion secondary battery according to claim 1, wherein R1 represents a hydrocarbon group having 6 to 8 carbon atoms.

3. The negative electrode slurry for a lithium ion secondary battery according to claim 1 or 2, wherein R2 represents a methyl group.

4. The negative electrode slurry for a lithium ion secondary battery according to any one of claims 1 to 3, wherein the preservative contains at least one of piroctone olamine or ciclopirox olamine.

5. The negative electrode slurry for a lithium ion secondary battery according to any one of claims 1 to 4, wherein a content of the piroctone olamine is greater than or equal to 0.025 mass% with respect to a total amount of the negative electrode slurry for a lithium ion secondary battery.

6. A method for manufacturing a negative electrode for a lithium ion secondary battery, the method comprising a step of applying the negative electrode slurry for a lithium ion secondary battery according to any one of claims 1 to 5 onto a negative electrode current collector.

7. A method for manufacturing a lithium ion secondary battery, the method comprising using a negative electrode for a lithium ion secondary battery to manufacture a lithium ion secondary battery, the negative electrode obtained by the method for manufacturing a negative electrode for a lithium ion secondary battery according to claim 6.

8. A negative electrode for a lithium ion secondary battery, the negative electrode comprising a negative electrode mixture layer containing: a negative electrode active material; a thickener; and a preservative,
the thickener containing carboxymethyl cellulose or a carboxymethyl cellulose salt,
the preservative containing a cyclic hydroxamic acid ethanolamine salt having Chemical Formula (1) described below: 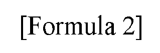 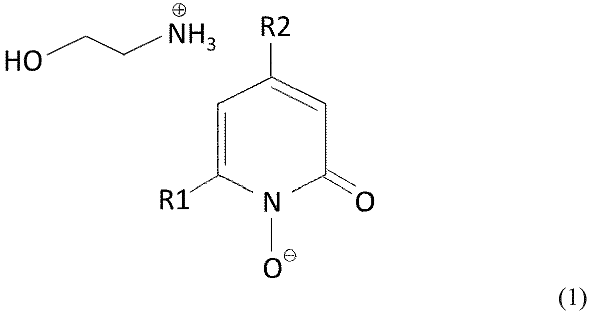
wherein R1 and R2 each independently represent a hydrogen atom or a hydrocarbon group optionally having a substituent.

9. The negative electrode for a lithium ion secondary battery according to claim 8, wherein R1 represents a hydrocarbon group having 6 to 8 carbon atoms.

10. The negative electrode for a lithium ion secondary battery according to claim 8 or 9, wherein R2 represents a methyl group.

11. The negative electrode for a lithium ion secondary battery according to any one of claims 8 to 10, wherein the preservative contains at least one of piroctone olamine or ciclopirox olamine.

12. The negative electrode for a lithium ion secondary battery according to any one of claims 8 to 11, wherein a content of the piroctone olamine is greater than or equal to 0.05 mass% with respect to a total amount of the negative electrode mixture layer.

13. A lithium ion secondary battery comprising the negative electrode for a lithium ion secondary battery according to any one of claims 8 to 12.
